Europäisches Patentamt

European Patent Office

Office européen des brevets

(19)

(11) Veröffentlichungsnummer: **0 064 669**
**B1**

(12) # EUROPÄISCHE PATENTSCHRIFT

(45) Veröffentlichungstag der Patentschrift:
02.11.88

(51) Int. Cl.⁴: **B 60 K 41/20,** B 60 T 8/86

(21) Anmeldenummer: 82103596.1

(22) Anmeldetag: 28.04.82

(54) Antriebsschlupfregelung.

(30) Priorität: 30.04.81 DE 3117104
17.02.82 DE 3205627

(43) Veröffentlichungstag der Anmeldung:
17.11.82 Patentblatt 82/46

(45) Bekanntmachung des Hinweises auf die Patenterteilung:
02.11.88 Patentblatt 88/44

(84) Benannte Vertragsstaaten:
DE FR GB

(56) Entgegenhaltungen:
FR-A-2 100 329
US-A-3 938 611
US-A-4 042 059

(73) Patentinhaber: ROBERT BOSCH GMBH, Postfach
50, D-7000 Stuttgart 1 (DE)

(72) Erfinder: Braschel, Volker, Ing. grad.,
Goethestrasse 1, D-7100 Heilbronn (DE)
Erfinder: Jonner, Wolf- Dieter, Ing. grad.,
Burgunderstrasse 25, D-7141 Beilstein (DE)
Erfinder: Korasiak, Wolfgang, Ing. grad.,
Karlsruherstrasse 34, D-6834 Ketsch (DE)
Erfinder: Leiber, Heinz, Ing. grad., Theodor- Heuss-
Strasse 34, D-7141 Oberriexingen (DE)

## Beschreibung

### Stand der Technik

Die Erfindung geht aus von einer Antriebsschlupfregelung nach der Gattung des Hauptanspruches.

Es ist bekannt, bei Kraftfahrzeugen Mittel vorzusehen, die das Durchdrehen der angetriebenen Räder verhindern, wenn beispielsweise beim Anfahren das vom Antriebsstrang an die Räder abgegebene Drehmoment größer ist als dies nach den gegebenen Haftbedingungen zwischen Rad und Straße zulässig ist. So ist beispielsweise in der DE-PS 1 806 671, aus der die Merkmale des Oberbegriffs des Anspruch 1 bekannt sind, eine Vorrichtung zum Verhindern des Durchdrehens der angetriebenen Räder eines Kraftfahrzeuges beschrieben, bei der die Differenz der Drehzahlen jeweils eines angetriebenen und eines nicht angetriebenen Rades gebildet wird und aus dem so ermittelten Schlupf des angetriebenen Rades bei Überschreiten eines vorgegebenen Grenzwertes ein Steuersignal für ein Stellglied einer dem jeweiligen angetriebenen Rad zugeordneten Bremse erzeugt wird. Weiterhin sind auf die Antriebsmaschine einwirkende Mittel vorgesehen, die angesteuert werden, wenn der Schlupf an beiden angetriebenen Rädern einen vorgegebenen Betrag überschreitet.

Die bekannte Vorrichtung hat jedoch den Nachteil, daß entweder ein angetriebenes Rad abgebremst oder auf den Motor eingewirkt wird.

Aus der US-A 3 938 611 ist eine Antriebsschlupfregelung mit Motoreingriff bekannt.

### Vorteile der Erfindung

Die erfindungsgemäße Antriebsschlupfregelung mit den kennzeichnenden Merkmalen des Hauptanspruches hat demgegenüber den Vorteil, daß gleichzeitig das von der Antriebsmaschine abgegebene Drehmoment so eingestellt wird, daß es dem auf die Straße übertragbaren Drehmoment entspricht und gleichzeitig die Hinterradgeschwindigkeiten aneinander angeglichen werden, so daß jedes Antriebsrad seine maximale Antriebskraft übertragen kann.

Durch die in den Unteransprüchen aufgeführten Maßnahmen sind vorteilhafte Weiterbildungen der im Hauptanspruch angegebenen Antriebsschlupfregelung möglich. So wird in bevorzugter Ausgestaltung der Erfindung eine Beeinflussung der Antriebsmaschine nur dann vorgenommen, wenn die Motordrehzahl oberhalb der Leerlaufdrehzahl liegt, um zu verhindern, daß durch die Beeinflussung der Antriebsmaschine bei niedrigen Drehzahlen diese abgewürgt wird.

Die erfindungsgemäße Antriebsschlupfregelung mit den kennzeichnenden Merkmalen des Anspruches 5 hat darüber hinaus den Vorteil, daß die besonderen Verhältnisse berücksichtigt werden, die dann auftreten, wenn das Fahrzeug auf nasser Fahrbahn in den sogenannten Aquaplaning-Zustand gerät. Es wird dann der Augenblickswert der Drehzahl eines nicht angetriebenen Rades festgehalten, um Fehlsteuerungen zu vermeiden, die dadurch entstehen können, daß das in den Aquaplaning-Zustand geratende nicht angetriebene Rad eine falsche Fahrgeschwindigkeit vortäuscht.

In bevorzugter weiterer Ausgestaltung der Erfindung wird dabei die Beeinflussung der Stellglieder der Bremsen der angetriebenen Räder abgeschaltet, um Instabilitäten des Fahrzeuges zu vermeiden.

### Zeichnung

Ausführungsbeispiele der Erfindung sind in der Zeichnung dargestellt und in der nachfolgenden Beschreibung näher erläutert. Es zeigen

Figur 1 ein Blockschaltbild einer erfindungsgemäßen Antriebsschlupfregelung,

Figur 2 ein Blockschaltbild einer weiteren Ausführungsform mit Erkennung eines Aquaplaning-Zustandes.

### Beschreibung der Ausführungsbeispiele

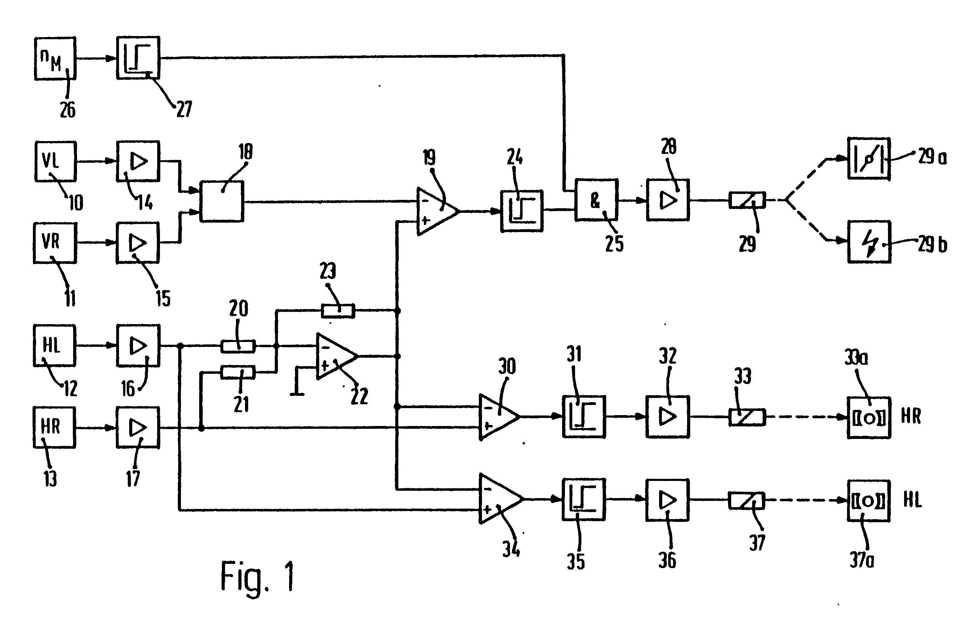

In Figur 1 sind mit 10, 11, 12, 13 Drehzahlgeber für das vordere linke Rad VL das vordere rechte Rad VR, das hintere linke Rad HL und das hintere rechte Rad HR bezeichnet. Diese Drehzahlgeber 10, 11, 12, 13 sind an Schaltungen zur Verstärung und Signalaufbereitung 14, 15, 16, 17 angeschlossen. Die den Vorderrädern VL und VR entsprechenden Signale werden auf eine Schaltung zur Minimalwertauswahl 18 geführt, deren Ausgang an einen Eingang eines Vergleichers 19 angeschlossen ist. Die den Hinterrädern HL und HR entsprechenden Signale liegen an Eingangswiderständen 20, 21 eines Operationsverstärkers 22, der mit einem Widerstand 23 gegengekoppelt ist. Der Ausgang des Operationsverstärkers 22 ist mit dem anderen Eingang des Vergleichers 19 verbunden. Der Ausgang des Vergleichers 19 führt über eine Schwellwertstufe 24 auf einen Eingang eines UND-Gatters 25, dessen anderer Eingang mit dem Ausgang einer Schwellwertstufe 27 beschaltet ist, die eingangsseitig von einem Motordrehzahl-Geber 26 angesteuert wird. Der Ausgang des UND-Gatters 25 führt schließlich über einen Verstärker 28 auf ein Stellglied 29 zur Beeinflussung des Motordrehmomentes, was durch die gestrichelte Verbindung zu einer

Drosselklappe 29a bzw. einer Zündeinrichtung 29b angedeutet ist. Es versteht sich jedoch von selbst, daß die Beeinflussung durch das Stellglied 29 auch in anderer, an sich bekannter Weise ausgeführt sein kann, beispielsweise durch Beeinflussung einer Einspritzanlage und dgl.

Der Ausgang des Operationsverstärkers 22 ist weiterhin an den einen Eingang eines Vergleichers 30 angeschlossen, der über eine Schwellwertstufe 31, und einen Verstärker 32 auf ein Stellglied 33 für die Bremse 33a des rechten Hinterrades HR führt. In entsprechender Weise ist der Ausgang des Operationsverstärkers 22 an den einen Eingang eines Vergleichers 3b angeschlossen, dessen Ausgang über eine Schwellwertstufe 35 und einem Verstärker 36 an ein Stellglied 37 für die Bremse 37a des linken Hinterrades HL führt. Die weiteren Eingänge der Vergleicher 30, 34 sind mit den Ausgängen der Schaltungen 16, 17 zum Verstärken und Signalaufbereiten der Drehzahl des linken Hinterrades HL und des rechten Hinterrades HR verbunden.

Die Wirkungsweise der in Figur 1 dargestellten Schaltungsanordnung ist wie folgt.

Die den Drehzahlen des linken Vorderrades VL bzw. des rechten Vorderrades VR entsprechenden Signale werden in der Schaltung zur Minimalwertauswahl 18 so verarbeitet, daß dasjenige Drehzahlsignal durchgelassen wird, das dem langsamer drehenden Rad entspricht. Dieses Signal ist die beste Annäherung an die tatsächliche Fahrgeschwindigkeit des Kraftfahrzeuges. Andererseits werden die Drehzahlsignale des linken Hinterrades HL und des rechten Hinterrades HR im Operationsverstärker 22 verarbeitet und zwar durch geeignete Dimensionierung der Widerstände 20, 21, 23 derart, daß am Ausgang des Operationsverstärkers 22 ein Signal entsteht, das dem arithmetischen Mittelwert der Hinterraddrehzahlen entspricht, also einer mittleren Hinterachsdrehzahl. Diese mittlere Hinterachsdrehzahl wird im Vergleicher 19 mit der Drehzahl des am langsamsten drehenden Vorderrades, d.h. näherungsweise der Fahrgeschwindigkeit verglichen. Überschreitet das Differenzsignal am Ausgang des Vergleichers 19 die in der Schwellwertstufe 24 vorgegebene Schwelle, wird der eine Eingang des UND-Gatters 25 angesteuert, dessen anderer Eingang dann angesteuert ist, wenn die Motordrehzahl $n_M$ oberhalb einer vorbestimmten Schwelle, die durch die Schwellwertstufe 27 festgelegt ist, liegt. Dies ist vorzugsweise dann der Fall, wenn die Motordrehzahl oberhalb der Leerlaufdrehzahl liegt. Da dies im Fahrbetrieb des Kraftfahrzeuges im allgemeinen der Fall sein wird, wird das UND-Gatter 25 am oberen Eingang freigegeben und das Ausgangssignal der Schwellwertstufe 24 gelangt über den Verstärker 28 auf das Stellglied 29 und beeinflußt die Antriebsmaschine über die Kraftstoffzufuhr oder die Zündung oder dergleichen in ihrem Drehmoment solange, bis das Ausgangssignal des Vergleichers 19 unter den in der Schwellwertstufe 24 vorgegebenen Wert fällt.

Wenn demnach der Fahrer eines Kraftfahrzeuges mit zu großem Motordrehmoment anfährt und die angetriebenen Hinterräder insbesondere auf schlüpfiger Straße durchdrehen, wird das Stellglied 29 sofort angesteuert und das Motordrehmoment solange verkleinert, bis die angetriebenen Hinterräder noch um einen gewissen Betrag schneller drehen als das langsamste nicht angetriebene Vorderrad. Diese Differenz ist - wie bereits erwähnt - durch die Schwellwertstufe 24 festgelegt und entspricht dem optimalen Schlupf beim Anfahren.

Zusätzlich ist der Ausgang des Operationsverstärkers 22 an die Vergleicher 30, 34 angeschlossen, in denen die mittlere Hinterachsdrehzahl mit den Drehzahlen der einzelnen Räder verglichen wird. Die Drehzahlen der Hinterräder HL, HR können sich wegen des Hinterachsdifferentials unter Umständen erheblich unterscheiden, beispielsweise dann, wenn sich das eine Rad auf trockenem Untergrund befindet und das andere Rad auf einer Eisplatte. In diesem Fall wird das auf der Eisplatte befindliche Rad durchdrehen und das auf trockenem Untergrund stehende Rad stehen bleiben, so daß das Fahrzeug nicht anfahren kann. Bei der in der Figur dargestellten Schaltungsanordnung wird dieses Abweichen von der mittleren Hinterachsdrehzahl erkannt und führt dazu, daß die Bremse des schneller drehenden Rades, im genannten Beispiel also des Rades auf der Eisplatte, angezogen wird. Da das auf trockenem Untergrund stehende Rad nicht abgebremst wird, ist mit einer erfindungsgemäßen Vorrichtung ein Anfahren auch in einer derartigen Situation möglich.

Wie demnach ersichtlich, wird mit der erfindungsgemäßen Antriebsschlupfregelung gleichzeitig auf das Motordrehmoment und die einzelnen angetriebenen Räder eingewirkt, so daß einmal das Aufbringen des Motordrehmomentes auf die Fahrbahn optimiert und zum anderen die Kraftverteilung an den angetriebenen Räder ausgeglichen wird.

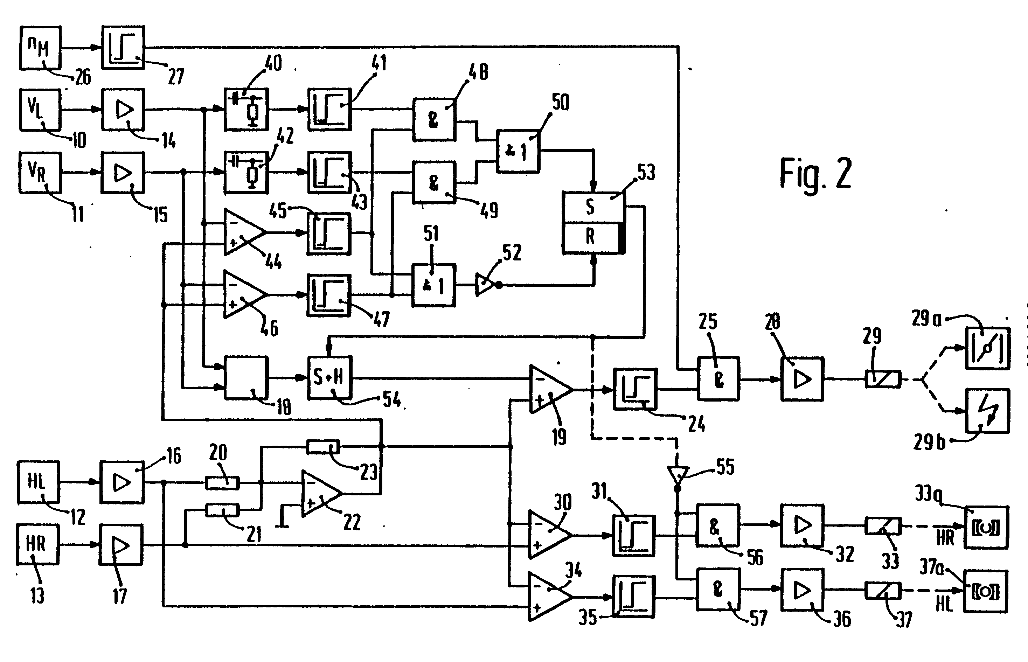

Bei dem in Figur 2 dargestellten weiteren Ausführungsbeispiel einer erfindungsgemäßen Antriebsschlupfregelung ist den besonderen Verhältnissen Rechnung getragen, die dann auftreten, wenn das Fahrzeug auf nasser Fahrbahn in den sogenannten Aquaplaning-Zustand gerät.

Hierzu ist den Verstärkern 14, 15 des linken Vorderrades $V_L$ bzw. des rechten Vorderrades VR je eine Differenzierstufe 40, 42 mit nachgeschalteter Schwellwertstufe 41, 43 nachgeschaltet. Weiterhin ist den Verstärkern 14, 15 je ein Komparator 44, 46 in Reihe mit weiteren Schwellwertstufen 45, 47 nachgeschaltet, wobei die heiteren Eingänge der Komparatoren 44, 46 an den Ausgang des Verstärkers 22 angeschlossen sind, an dem ein der mittleren

Hinterraddrehzahl entsprechendes Signal anliegt. Die dem linken Vorderrad $V_1$ zugeordneten Schwellwertstufen 41, 45 sind auf ein erstes UND-Gatter 48 und die den rechten Vorderrad VR zugeordneten Schwellwertstufen 43, 47 sind auf ein zweites UND-Gatter 49 geführt. Die Ausgänge der UND-Gatter 48, 49 sind an ein ODER-Gatter 50 angeschlossen und die Ausgänge der Schwellwertstufen 45, 47 sind an ein weiteres ODER-Gatter 51 mit nachgeschaltetem Inverter 52 angeschlossen. Das ODER-Gatter 50 führt auf den Setzeingang und der Inverter 52 auf den Rücksetzeingang eines Flipflops 53, dessen nicht invertierter Ausgang eine Sample-and-Hold-Stufe 54 steuert, die bei dem Ausführungsbeispiel gemäß Figur 2 zwischen der Minimalwertauswahl 18 und dem Vergleicher 19 angeordnet ist.

In weiterer Ausgestaltung der Erfindung führt der nicht invertierte Ausgang des Flipflops 53 noch zu einem Inverter 55, dessen Ausgang auf Eingänge zweier UND-Gatter 56, 57 führt, die bei diesem Ausführungsbeispiel zwischen der Schwellwertstufe 31 und dem Verstärker 32 bzw. der Schwellwertstufe 35 und dem Verstärker 36 angeordnet sind.

Die Wirkungsweise der in Figur 2 dargestellten Anordnung ist wie folgt:

Bei auftretendem Aquaplaning werden die Vorderräder $V_L$, $V_R$ durch die Wasserschicht auf der Fahrbahn gebremst, so daß ein Schlupf und gleichzeitig eine Verzögerung an den Vorderrädern $V_L$, $V_R$ entsteht. Die Verzögerung der Vorderräder $V_L$, $V_R$ wird über die Differenzierstufen 40, 42 erkannt, wobei in den Schwellwertstufen 51, 53 festgelegt wird, ob ein vorgegebener Grenzwert überschritten wird oder nicht. Der Schlupf der Vorderräder $V_L$, $V_R$ wird in den Komparatoren 44, 46 erkannt, denen zum Vergleich die mittlere Hinterachsdrehzahl vom Verstärker 22 zugeführt wird. Die Schwellwertstufen 45, 47 legen dabei fest, ob kritische Schlupfwerte des linken bzw. rechten Vorderrades überschritten werden. Durch die Anordnung der logischen Elemente 28 bis 52 wird nun bewirkt, daß das Flipflop 53 dann gesetzt wird, wenn entweder am linken oder rechten Vorderrad jeweils gleichzeitig der kritische Verzögerungs- und Schlupfwert überschritten wird. Das Flipflop 53 wird demgegenüber erst dann wieder zurückgesetzt, wenn an keinem der beiden Vorderräder mehr der kritische Schlupfwert überschritten ist. Ein Setzen des Flipflops 53 hat eine Ansteuerung der Sample-and-Hold-Stufe 54 zur Folge, wodurch der Augenblickswert der jeweils von der Minimalwertauswahl 18 festgelegten Raddrehzahl festgehalten wird, wobei selbstverständlich durch geeignete Verzögerungsmittel garantiert ist, daß jeweils derjenige Wert der Raddrehzahl festgehalten wird, der bei Eintreten des Aquaplaning-Zustandes vorlag. Die Sample-and-Hold-Stufe 54 bewirkt damit eine Extrapolation der angenommenen Fahrgeschwindigkeit, so daß keine Fehlreaktion dadurch auftreten kann, daß die in den Aquaplaning-Zustand geratenden Vorderräder eine falsche Fahrgeschwindigkeit vortäuschen. Es versteht sich dabei weiter, daß die Sampleand-Hold-Stufe 54 durch verschiedene, an sich bekannte Schaltungen dargestellt werden kann, im einfachsten Fall durch einen entladbaren Kondensator.

Da bei auftretendem Aquaplaning-Zustand die Beeinflussung der Bremsen der angetriebenen Räder durch die Stellglieder 33, 37 zu Instabilitäten führen kann, ist in der weiteren Ausgestaltung der Erfindung vorgesehen, die Ansteuerung der Stellglieder 33, 37 über die UND-Gatter 56, 57 zu sperren, die an ihren einen Eingängen bei Setzen des Flipflops 53 über den Inverter 55 mit einem O-Signal beaufschlagt werden, so daß die Ausgangssignale der Schwellwertstufen 31, 35 nicht weitergeleitet werden.

**Patentansprüche**

1. Antriebsschlupfregelung bei einem Kraftfahrzeug mit Schaltmitteln (10 - 17) zum Erfassen der Drehzahlen angetriebener und nicht angetriebener Räder und mit Stellgliedern (29, 33, 37) zum Beeinflussen des Motordrehmomentes und der den angetriebenen Rädern zugeordneten Bremsen (33a, 37a), dadurch gekennzeichnet, daß der arithmetische Mittelwert der Drehzahlen der angetriebenen Räder gebildet (Verstärker 22), mit der Drehzahl eines nicht angetriebenen Rades verglichen (Vergleicher 19) und bei Überschreiten eines Differenz-Grenzwertes (Schwellwertstufe 24) das Stellglied (29) zur Beeinflussung des Motordrehmomentes angesteuert wird, daß weiter die Drehzahlen eines jeden der angetriebenen Räder mit dem arithmetischen Mittelwert verglichen (Vergleicher 30, 34) und bei Überschreiten eines Differenz-Grenzwertes (Schwellwertstufen 31, 35) das Stellglied (33, 37) der Bremse des zugehörigen angetriebenen Rades angesteuert wird.

2. Antriebsschlupfregelung nach Anspruch 1, dadurch gekennzeichnet, daß die Drehzahl des jeweils langsamer drehenden nicht angetriebenen Rades ausgewertet wird (Minimalwertbildner 18).

3. Antriebsschlupfregelung nach Anspruch 1, dadurch gekennzeichnet, daß als Drehzahl eines nicht angetriebenen Rades der arithmetische Mittelwert der Drehzahlen der nicht angetriebenen Räder ausgewertet wird.

4. Antriebsschlupfregelung nach einem der Ansprüche 1 bis 2, dadurch gekennzeichnet, daß das Stellglied (29) zum Beeinflussen des Motordrehmomentes nur angesteuert wird, wenn die Motordrehzahl über einer vorbestimmten Drehzahl, vorzugsweise der Leerlaufdrehzahl liegt (UND-Gatter 25).

5. Antriebsschlupfregelung nach Anspruch 1, dadurch gekennzeichnet, daß zusätzlich die

Drehzahlen der nicht angetriebenen Räder mit dem arithmetischen Mittelwert verglichen werden (Vergleicher 44, 46) und daß bei Überschreiten eines Differenz-Grenzwertes der Augenblickswert der Drehzahl eines nicht angetriebenen Rades am Eingang des Vergleichers (19) bis zum Wieder-Unterschreiten des Differenz-Grenzwertes festgehalten wird (Sample und hold-Stufe 54).

6. Antriebsschlupfregelung nach Anspruch 5, dadurch gekennzeichnet, daß der Augenblickswert nur dann festgehalten wird, wenn zusätzlich die Verzögerung eines nicht angetriebenen Rades einen vorgegebenen Schwellwert überschreitet (Differenzierer 40, 42 und UND-Gatter 48, 49).

7. Antriebsschlupfregelung nach Anspruch 5 oder 6, dadurch gekennzeichnet, daß dem Eingang des Vergleichers (19) die Drehzahl des jeweils langsamer drehenden, nicht angetriebenen Rades zugeführt wird (Minimalwertstufe 18).

8. Antriebsschlupfregelung nach einem der Ansprüche 5 bis 7, dadurch gekennzeichnet, daß als Drehzahl eines nicht angetriebenen Rades der arithmetische Mittelwert der Drehzahlen der nicht angetriebenen Räder ausgewertet wird.

9. Antriebsschlupfregelung nach einem der Ansprüche 5 bis 7, dadurch gekennzeichnet, daß das Stellglied (29) zum Beeinflussen des Motordrehmomentes nur angesteuert wird, wenn die Motordrehzahl über einer vorbestimmten Drehzahl, vorzugsweise der Leerlaufdrehzahl liegt (UND-Gatter 25).

10. Antriebsschlupfregelung nach einem der Ansprüche 1 bis 9, dadurch gekennzeichnet, daß bei Festhalten des Augenblickswertes die Stellglieder (33, 37) der Bremsen (33a, 37a) nicht ansteuerbar sind.

## Claims

1. Propulsion skid regulation on a motor vehicle with switching means (10 - 17) for detecting the speeds of driven and non-driven wheels and with final control elements (29, 33, 37) for influencing the engine torque and the brakes (33a, 37a) assigned to the driven wheels, characterized in that the arithmetic mean of the speeds of the driven wheels is formed (amplifier 22), is compared with the speed of a non-driven wheel (comparator 19) and, if a differential limit value (threshold stage 24) is exceeded, the final control element (29) for influencing the engine torque is actuated, in that furthermore the speeds of each of the driven wheels are compared with the arithmetic mean (comparators 30, 34) and, if a differential limit value (threshold stages 31, 35) is exceeded, the final control element (33, 37) of the brakes of the associated driven wheel is actuated.

2. Propulsion skid regulation according to Claim 1, characterized in that the speed of the slower-turning non-driven wheel in each case is evaluated (minimum value selector 18).

3. Propulsion skid regulation according to Claim 1, characterized in that the arithmetic mean of the speeds of the non-driven wheels is evaluated as speed of a non-driven wheel

4. Propulsion skid regulation according to one of Claims 1 to 2, characterized in that the final control element (29) for influencing the engine torque is only actuated if the engine speed is above a predetermined speed, preferably the idling speed (AND gate 25).

5. Propulsion skid regulation according to Claim 1, characterized in that, in addition, the speeds of the non-driven wheels are compared with the arithmetic mean (comparators 44, 46) and in that, if a differential limit value is exceeded, the instantaneous value of the speed of a non-driven wheel is held (sample-and-hold stage 54) at the input of the comparator (19) until it again falls below the differential limit value.

6. Propulsion skid regulation according to Claim 5, characterized in that the instantaneous value is only held if, in addition, the retardation of a non-driven wheel exceeds a predetermined threshold (differentiating stages 40, 42 and AND gates 48, 49).

7. Propulsion skid regulation according to Claim 5 or 6, characterized in that the speed of the slower-turning, non-driven wheel in a particular case is supplied (minimum value stage 18) to the input of the comparator (19).

8. Propulsion skid regulation according to one of Claims 5 to 7, characterized in that the arithmetic mean of the speeds of the non-driven wheels is evaluated as speed of a non-driven wheel.

9. Propulsion skid regulation according to one of Claims 5 to 7, characterized in that the final control element (29) for influencing the engine torque is only actuated if the engine speed is above a predetermined speed, preferably the idling speed (AND gate 25).

10. Propulsion skid regulation according to one of Claims 1 to 9, characterized in that, when the instantaneous value is held, the final control elements (33, 37) of the brakes (33a, 37a) cannot be actuated.

## Revendications

1. Régulation d'entraînent en cas de glissement, pour un véhicule automobile, comportant des moyens de circuit (10 - 17) pour l'acquisition des vitesses de rotation de roues motrices et de roues non motrices, et des organes de réglage (29, 33, 37) pour influencer le couple du leur et les freins (33a, 37a) associés aux roues motrices, caractérisé, par le fait que la valeur moyenne arithmétique des vitesses de rotation des roues motrices est force (amplificateur 22), comparée à la vitesse de rotation d'une roue non motrice (comparateur 19)

et, en cas de dépassement d'une valeur-limite de différence (étage à valeur de seuil 24), l'organe de réglage (29) destiné à influencer le couple du moteur est commandé, par le fait que les vitesses de rotation de chacune des roues motrices sont comparées à la valeur moyenne arithmétique (comparateurs 30, 34) et, en cas de dépassement d'une valeur-limite de différence (étages a valeur de seuil 31, 35), l'organe de réglage (33, 37) du frein de la roue motrice y afférente est commandé.

2. Régulation d'entraîn en cas de glissement selon revendication 1, caractérisée par le fait que la vitesse de rotation de la roue non motrice tournant le plus lentement est exploitée (formateur de valeur minimale 18).

3. Régulation d'entraîn en cas de glissement selon revendication 1, caractérisée par le fait que la valeur moyenne arithmétique des vitesses de rotation des roues non motrices est exploitée en tant que vitesse de rotation d'une roue non motrice.

4. Régulation d'entraînement en cas de glissement selon l'une des revendications 1 a 2, caractérisée par le fait que l'organe de réglage (29) pour influencer le couple du moteur n'est commande que si la vitesse de rotation du moteur est superieure à une vitesse de rotation prédéterminée, de préférence à la vitesse de ralenti (porte ET 25).

5. Régulation d'entraîn en cas de glissement selon revendication 1, caractérisée par le fait que les vitesses de rotation des roues non motrices sont en outre comparées à la valeur moyenne arithmétique (comparateurs 44, 46), et par le fait qu'en cas de dépassement d'une valeur-limite de différence, la valeur instantanée de la vitesse de rotation d'une roue non motrice est retenue à l'entrée du comparateur (19) jusqu'au retour à une valeur inférieure à la valeur-limite de différence (étage d'échantillonnage et maintien 54).

6. Régulation d'entraînement en cas de glissement selon revendication 5, caractérisée par le fait que la valeur instantanée n'est retenue que si, en plus, la décélération d'une roue non motrice excède une valeur de seuil prédéterminée (différentiateurs 40, 42 et portes ET 48, 49).

7. Régulation d'entraînement en cas de glissement selon revendication 5 ou 6, caractérisée par le fait que la vitesse de rotation de la roue non motrice tournant le plus lentement est appliquée à l'entrée du comparateur (19) (étage à valeur minimale 18).

8. Régulation d'entraînement en cas de glissement selon l'une des revendications 5 à 7, caractérisée par le fait que la valeur moyenne arithmétique des vitesses de rotation des roues non motrices est exploitée en tant que vitesse de rotation d'une roue non motrice.

9. Régulation d'entraînement en cas de glissement selon l'une des revendications 5 à 6, caractérisée par le fait que l'organe de réglage (29) pour influencer le couple du moteur n'est commande que si la vitesse de rotation du moteur excède une vitesse de rotation prédeterminée, de préférence la vitesse de ralenti (porte ER 25).

10. Régulation d'entraînement en cas de glissement selon l'une des revendications 1 à 9, caractérisée par le fait que les organes de réglage (33, 37) des freins (33a, 37a) ne peuvent pas être commandés en cas de retenue de la valeur instantanée.

Fig. 1

Fig. 2